## Europäisches Patentamt
## European Patent Office
## Office européen des brevets

(19)

(11) Numéro de publication: **0 015 222**
**B1**

(12)

# FASCICULE DE BREVET EUROPEEN

(45) Date de publication du fascicule du brevet: 08.12.82

(51) Int. Cl.³: **A 61 C 19/04,** A 61 C 11/00

(21) Numéro de dépôt: **80430005.1**

(22) Date de dépôt: **25.02.80**

---

(54) Dispositif articulateurs pour reproduire les mouvements de la mandibule.

---

(30) Priorité: 26.02.79 FR 7905426

(43) Date de publication de la demande:
03.09.80 Bulletin 80/18

(45) Mention de la délivrance du brevet:
08.12.82 Bulletin 82/49

(84) Etats contractants désignés:
CH DE GB SE

(56) Documents cités:
FR-A-1 447 240
FR-A-2 326 906
US-A-4 014 097

(73) Titulaire: ANVAR Agence Nationale de Valorisation de la Recherche, 13, rue Madeleine Michelis, F-92522 Neuilly-sur-Seine (FR)

(72) Inventeur: Santoni, Pierre Joseph, 1, Avenue Jean Jaurès, F-13700 Marignane (FR)

(74) Mandataire: Jarry, Marie-Thérèse et al, CABINET BEAU DE LOMENIE 55, rue d'Amsterdam, F-75008 Paris (FR)

BUNDESDRUCKEREI BERLIN

## Dispositifs articulateurs pour reproduire les mouvements de la mandibule

La présente invention a pour objet des dispositifs articulateurs pour reproduire les mouvements de la mandibule.

Le secteur technique de l'invention est celui des instruments et prothèses dentaires.

On connaît des appareils dits articulateurs qui permettent de reproduire mécaniquement certains mouvements de la mandibule. Ces articulateurs comportent deux supports articulés l'un par rapport à l'autre sur lesquels on fixe des moulages des maxillaires supérieur et inférieur. Ils sont destinés à permettre la mise au point des prothèses dentaires, en dehors de la présence du patient.

On peut distinguer parmi ceux-ci, les articulateurs non adaptables qui sont basés sur des dimensions anatomiques moyennes et les articulateurs adaptables qui permettent de modifier les trajectoires des mouvements d'après des enregistrements effectués sur la bouche d'un patient. On connaît par exemple les articulateurs de Gysi, de Hanau, l'articulateur Dentatus, l'articulateur de Gerber etc. ... De tels articulateurs sont décrits, par exemple, dans les brevets français No. 1 447 240 et américain 4 014 097. Le premier concerne un dispositif comprenant un appareil de mesure pour enregistrer, dans les trois dimensions, les mouvements de la mastication et un articulateur, muni de deux organes reproducteurs mobiles l'un par rapport à l'autre, pour aiguiser les surfaces masticatoires de dents artificielles.

Le second se rapporte à un procédé et un dispositif pour mesurer et enregistrer, par voie mécanique ou électrique les mouvements de la mastication dans les trois dimensions, où l'on obtient l'enregistrement des mouvements des différents éléments de référence disposés en liaison avec les maxillaires.

Tous ces articulateurs mécaniques sont imparfaits. En effet, les articulations tempo-mandibulaires sont des articulations complexes et mal connues qui permettent non seulement des mouvements d'ouverture et de fermeture mais également des mouvements de protrusion et de latéralité d'un maxillaire par rapport à l'autre. La construction mécanique de ces articulations est difficile à réaliser et ne reproduit pas fidèlement les articulations naturelles.

Un objectif de la présente invention est de procurer des articulateurs qui ne comportent aucune articulation entre les deux platines portant les moulages des maxillaires, ce qui supprime toutes les difficultés de réalisation de ces articulations et facilite l'accès par l'arrière aux moulages des maxilaires.

Pour pallier aux insuffisances de reproduction de prothèses, on a proposé un odontographe, tel que décrit dans la demande de brevet français No. 2 326 906, destiné à être associé aux articulateurs mécaniques existants. On retrouve avec cet appareil, comme dans les autres articulateurs mécaniques, l'inconvénient suivant: il est très difficile d'enregistrer mécaniquement les mouvements de la mandibule afin de transférer ceux-ci pour les reproduire à distance et/ou en temps différé. De plus, l'enregistrement mécanique permet d'enregistrer graphiquement les mouvements d'un ou plusieurs points dans un ou plusieurs plans mais il est très complexe de reconstituer ensuite, à partir de ces enregistrements graphiques, les mouvements réels de la mandibule.

Un autre objectif de la présente invention est de procurer des dispositifs qui permettent de reproduire à distance ou d'enregistrer pour reproduire en temps différé et pour répéter les mouvements habituels de la mandibule avec une très grande fidélité en ce qui concerne les déplacements de chaque point et la dynamique de es déplacements ainsi que les positions.

Un dispositif articulateur pour reproduire les mouvements de la mandibule est du type comportant deux supports mobiles l'un par rapport à l'autre sur lesquels sont fixés respectivement un moulage du maxillaire supérieur et un moulage du maxillaire inférieur d'un patient et des moyens pour animer lesdits supports afin de reproduire les mouvements de la mandibule dudit patient.

Les objectifs de l'invention sont atteints au moyen d'un dispositif qui comporte:

— d'une part, un dispositif de prélèvement des mouvements de la mandibule qui est composé de six capteurs de déplacement linéaires qui sont fixés par leurs deux extrémités respectivement au crâne et à la mandibule du patient, qui sont symétriques deux à deux par rapport au plan sagittal, les trois capteurs situés d'un même côté dudit plan sagittal étant disposés suivant trois directions non parallèles deux à deux, et qui convertissent analogiquement les déplacements linéaires en signaux électriques;

— d'autre part, l'articulateur proprement dit dont les deux platines sont reliées entre elles uniquement par des muscles artificiels occupant des positions identiques à celles desdits capteurs, lesquels muscles artificiels comportent chacun un servomoteur linéaire;

— et des circuits électroniques qui asservissent chaque servomoteur au capteur correspondant à partir des signaux électriques délivrés par ledit capteur.

Selon un mode de réalisation préférentiel, les circuits électroniques comportent des moyens pour enregistrer les signaux électriques délivrés par lesdits capteurs et des moyens pour lire les signaux enregistrés et pour les retransmettre en temps différé aux circuits d'asservissement desdits servomoteurs.

Le dispositif de prélèvement des mouvements comporte avantageusement une plaque supérieure et une plaque inférieure qui sont fixées respectivement au crâne et à la mandibule d'un patient et qui sont reliées entre elles par au moins six capteurs de déplacement, lesquels capteurs sont composés chacun de deux tiges alignées qui coulissent l'une par rapport à l'autre et dont les extrémités sont reliées par des articulations à rotule respectivement à la plaque supérieure et à la plaque inférieure et d'un transducteur qui délivre un signal électrique proportionnel au déplacement en translation d'une tige par rapport à l'autre.

Selon un mode de réalisation préférentiel, les capteurs de déplacement sont composés de deux tubes qui coulissent télescopiquement l'un dans l'autre, dont l'un porte une source lumineuse, par exemple une diode électroluminescente et l'autre un détecteur photosensible, par exemple une photorésistance.

L'articulateur proprement dit comporte:

- un support fixe, formé par exemple de portiques;
- une platine supérieure fixée audit support, sur laquelle est fixé un moulage du maxillaire supérieur;
- et une platine inférieure, sur laquelle est fixé un moulage du maxillaire inférieur, qui est suspendue à ladite platine supérieure par au moins six muscles artificiels qui correspondent chacun à l'un desdits capteurs, lesquels muscles artificiels comportent chacun deux tiges alignées qui coulissent axialement l'une par rapport à l'autre et qui sont reliées par des articulations à rotule respectivement à ladite platine supérieure et à ladite platine inférieure et un servomoteur linéaire qui comporte deux pattes mobiles en translation en sens inverse l'une de l'autre et qui sont fixées respectivement aux deux tiges, lequel servomoteur est asservi au signal délivré par le capteur auquel il correspond.

L'invention a pour résultat un nouveau dispositif articulateur électronique qui permet de reproduire, en temps réel ou en temps différé, localement ou à distance, tous les mouvements naturels de la mandibule d'un patient avec une grande fidélité spaciale et dynamique.

L'invention protège également d'une part le dispositif de prélèvement et d'enregistrement des mouvements qui est utilisé par le praticien dentiste et, d'autre part, le dispositif articulateur proprement dit qui est utilisé par les techniciens et mécaniciens dentistes pour reproduire les mouvements enregistrés et pour mettre au point des prothèses dentaires de tout type, par exemple des prothèses fixes, telles que des couronnes ou bridges, des prothèses amovibles ou des prothèses totales. L'articulateur permet de sculpter les faces occlusales des dents artificielles des prothèses de telle sorte que la forme de celles-ci tienne compte de tous les mouvements naturels des maxillaires.

Un dispositif de prélèvement et d'enregistrement des mouvements selon la revendication 1 est particulièrement intéressant lorsque l'ajustage d'une prothèse pose de délicats problèmes d'équilibres.

Le dispositif articulateur proprement dit permet de reproduire et de répéter avec une grande fidélité, en dehors de la présence du patient, tous les mouvements de mastication et de phonation de la mandibule et de simuler avec exactitude le comportement dynamique des prothèses.

Un avantage des dispositifs selon l'invention est qu'ils peuvent être réalisés facilement à partir d'un petit nombre de composants électroniques courants et peu coûteux, ce qui permet d'aboutir à un prix de fabrication moindre que celui des articulateurs mécaniques connus.

Un autre avantage des dispositifs selon l'invention réside dans le fait que le dispositif de prélèvement des mouvements est composé de capteurs légers, qui coulissent l'un par rapport à l'autre sans frottement et qui ne gênent pas les mouvements naturels du patient.

Un autre avantage des dispositifs selon l'invention réside dans le fait que toutes les informations nécessaires à la production du mouvement de la mandibule sont délivrées sous forme de signaux électriques. Ces signaux électriques peuvent être transmis immédiatement à distance et permettent donc de faire, en temps réel, de la téléreproduction du mouvement. Les signaux électriques peuvent également être enregistrés, sous forme analogique ou numérique, sur des enregistreurs courants, par exemple sur des bandes magnétiques, ce qui permet d'obtenir un enregistrement peu coûteux.

Un avantage important des articulateurs selon l'invention sur les articulateurs mécaniques connus réside dans le fait que les deux platines ne sont plus articulées l'une à l'autre, ce qui évite d'avoir à réaliser deux articulations tempomandibulaires complexes.

La description suivante se réfère aux dessins annexés qui représentent, sans aucun caractère limitatif, un exemple de réalisation d'un dispositif selon l'invention.

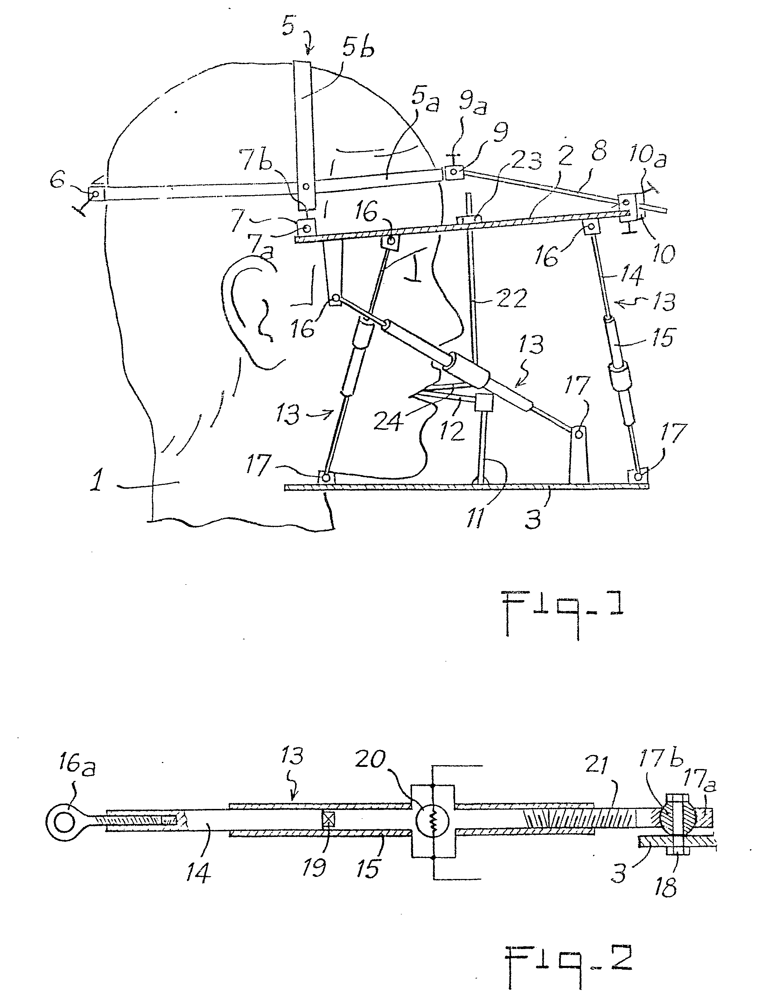

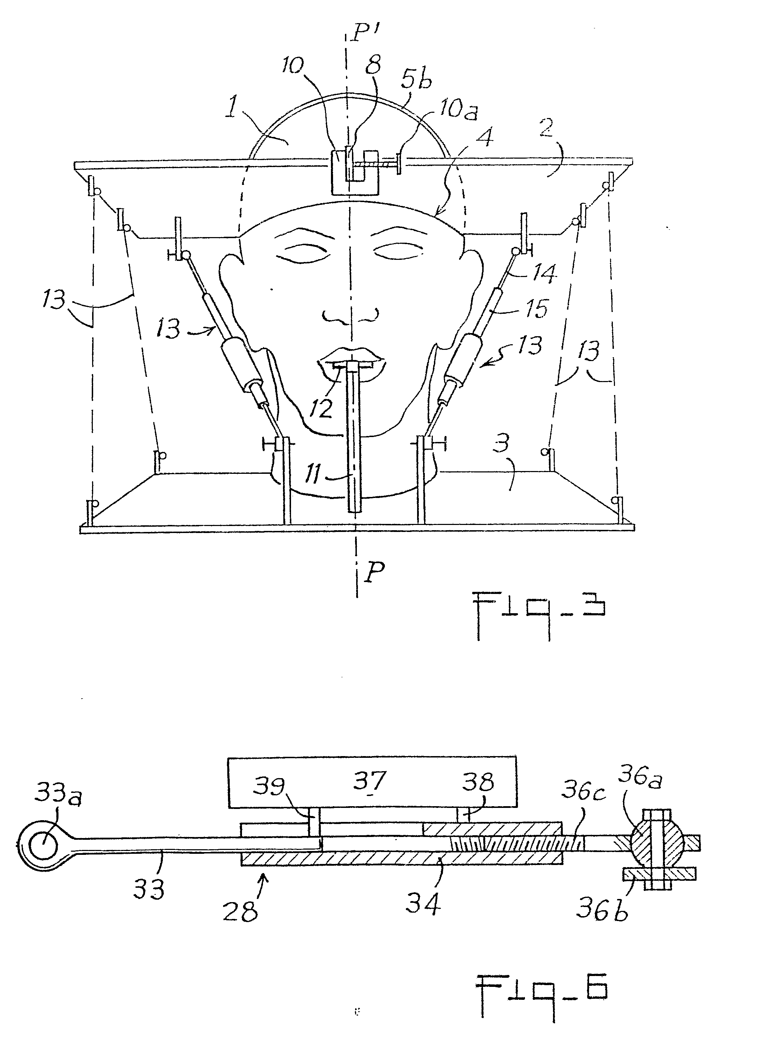

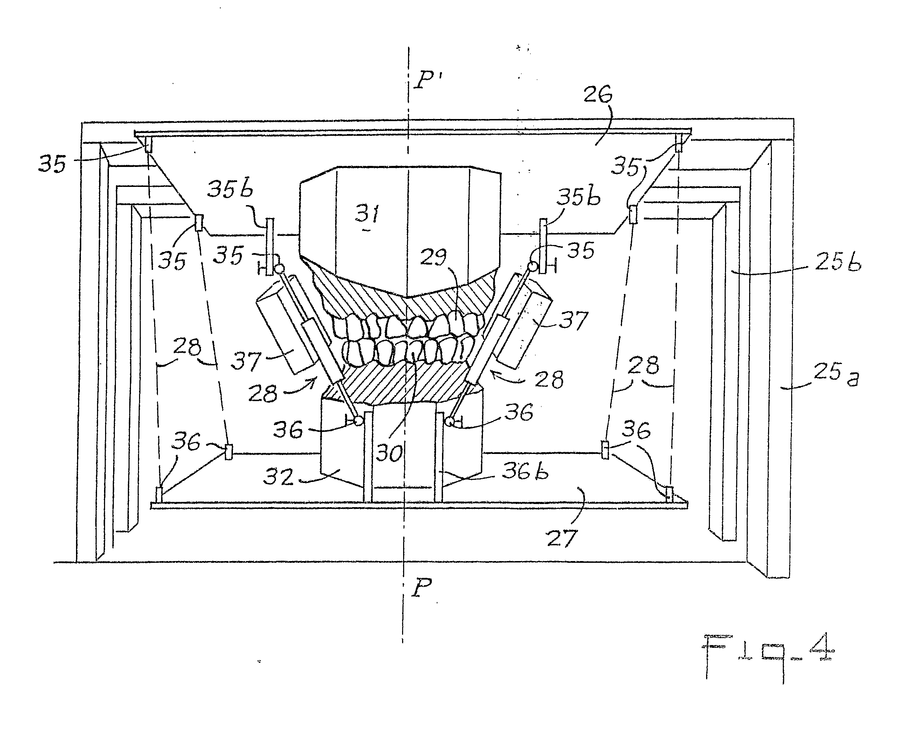

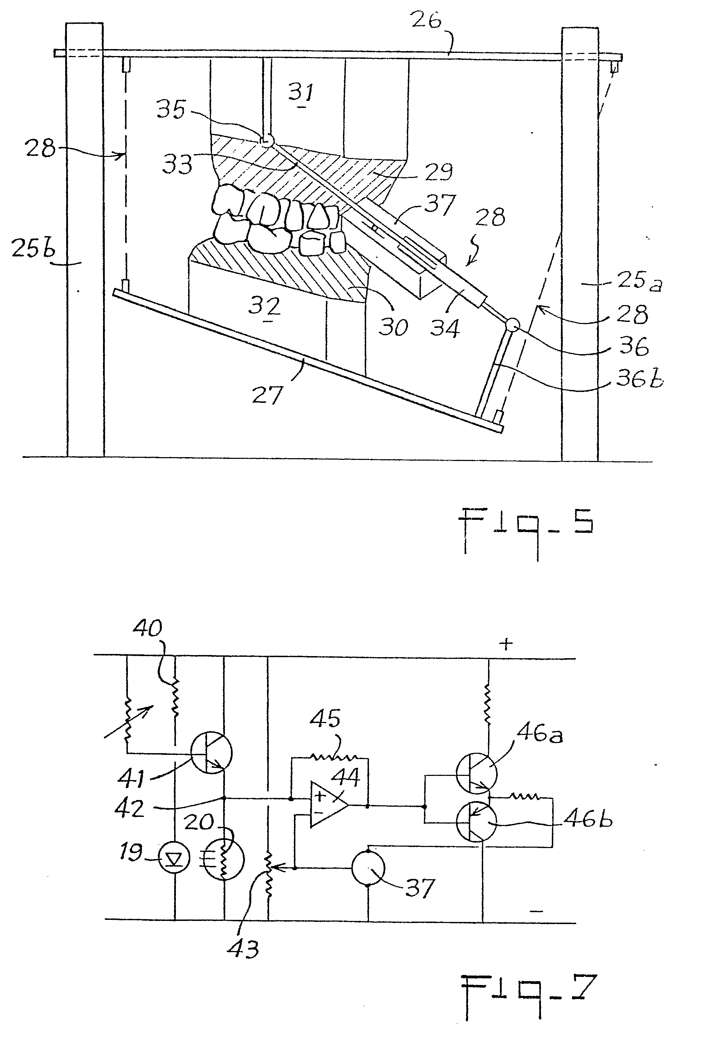

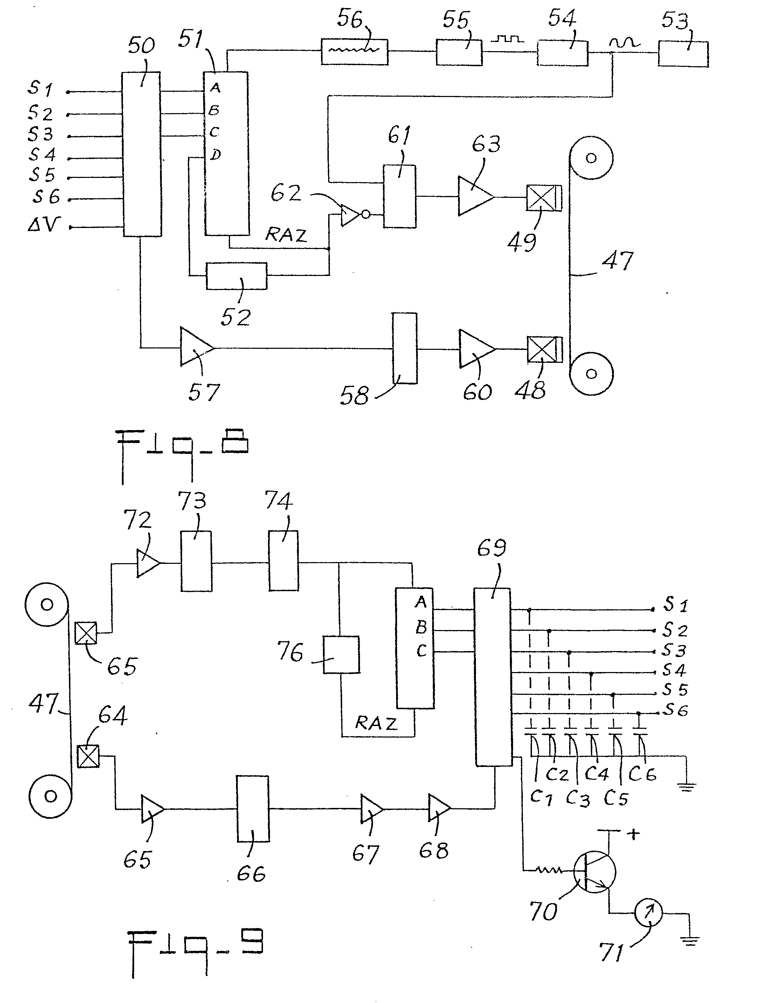

La figure 1 est une vue d'ensemble du dispositif de prélèvement des mouvements; la figure 2 est une coupe axiale d'un mode de réalisation d'un capteur de déplacement; la figure 3 est une vue de face du dispositif selon la figure 1; les figures 4 et 5 sont des vues respectives de côté et de face de l'articulateur proprement dit d'un dispositif selon l'invention; la figure 6 est une coupe axiale de l'un des muscles artificiels de l'articulateur; les figures 7, 8 et 9 sont des schémas synoptiques des principaux circuits électroniques d'un dispositif selon l'invention.

Les figures 1 et 3 représentent un dispositif de prélèvement des mouvements de la mandibule en place sur un patient 1. Ce dispositif comporte une plaque supérieure 2 qui est fixée au crâne du patient et une plaque inférieure 3 qui est solidaire de la mandibule du patient. Le terme plaque est employé dans un sens générique pour désigner tout support rigide de n'importe quelle forme. La plaque 2 présente la forme d'une visière dans laquelle est découpée une échancrure 4 qui entoure le front du patient. La plaque 2 est fixée à un casque 5 qui coiffe le crâne. Le casque 5 comporte par exemple une ceinture ou cerceau horizontal 5a qui entoure la boîte crânienne et qui comporte à l'arrière un dispositif de serrage 6 de tout type connu, par exemple un dispositif à vis. Le casque 5 comporte, en outre, une deuxième ceinture ou cerceau 5b situé dans un plan frontal. Bien entendu, le casque 5 peut être réalisé différemment.

La plaque 2 comporte deux fixations latérales 7 qui sont reliées aux extrémités du cerceau 5b par une articulation 7a. Une vis 7b permet de bloquer ces articulations dans une position déterminée. La plaque 2 est reliée au casque 5 par une tige 8. Le cerceau 5a porte à l'avant deux prolongements formant une fourche 9 dans laquelle une extrémité de la tige 8 est articulée. Une vis 9a permet de bloquer cette articulation. L'autre extrémité de la tige 8 coulisse entre deux flasques 10 portés par la plaque 2. Une vis 10a permet de bloquer la tige 8 entre les flasques et de faire varier la longueur de la tige 8. On comprend qu'en jouant sur les articulations 7a et sur la longueur de la tige 8, on peut régler la position de la plaque 2 par rapport au casque, puis bloquer la plaque 2 dans une position solidaire du casque et du crâne du patient.

Bien entendu, on peut utiliser d'autres moyens équivalents pour fixer la plaque 2, ou tout autre support équivalent, au crâne du patient.

La plaque 3 est reliée à la mandibule par une tige 11 portant une fourchette intra-buccale métallique 12 qui est appuyée contre la face externe des dents du maxillaire inférieur.

La fourchette 12 est garnie d'une pâte durcissable, par exemple d'une résine polymérisable à durcissement rapide et frixée aux dents par quelques gouttes de colle par exemple de la colle cyanoacrylate. Bien entendu, on pourra utiliser tout autre moyen équivalent pour fixer la fourchette 12 au maxillaire inférieur. L'ensemble tige 11 et fourchette 12 rend la plaque 3 solidaire des mouvements de la mandibule dans tous les sens.

Les plaques 2 et 3 sont reliées entre elles par six capteurs de déplacement 13 qui sont symétriques deux à deux par rapport au plan sagittal PP'. Pour la clarté du dessin, on a figuré certains de ces capteurs par une ligne pointillée. Les trois capteurs situés d'un même côté du plan PP' sont disposés suivant trois directions non parallèles deux à deux, de telle sorte qu'ils définissent trois axes et que tout déplacement de la plaque 3 par rapport à la plaque 2 peut être décomposé en trois déplacements dirigés suivant ces trois axes.

La figure 2 représente à plus grande échelle un des capteurs 13 qui ont tous une même composition. Chaque capteur 13 est composé de deux tiges alignées 14 et 15 qui coulissent librement l'une par rapport à l'autre, par par exemple de deux tubes qui coulissent télescopiquement l'un dans l'autre. Les deux extrémités des deux tiges sont reliées par des articulations à rotule 16 et 17 respectivement à la plaque supérieure et à la plaque inférieure. Par exemple, les deux extrémités libres des tiges 14 et 15 comportent un oeillet circulaire 16a, 17a qui est engagé sur un barillet sphérique, tel que le barillet 17b qui est fixé par un boulon 18 sur la plaque 3. Bien entendu, les oeillets et barillets peuvent être remplacés par des rotules sphériques qui tournent dans tous les sens dans des cavités sphériques fixées aux plaques 2 et 3. Ces articulations à rotule permettent que les capteurs 13 peuvent se mouvoir librement dans toutes les directions par rapport aux plaques 2 et 3.

Sur l'exemple de réalisation selon la figure 2, le tube 14 porte à son extrémité une diode électroluminescente 19 qui est alimentée en courant électrique sous une faible tension, par exemple une tension de 2,5 volts qui évite tout risque d'électrocution. Le tube 15 contient une photorésistance 20 qui est éclairée par la lumière émise par la diode 19 et dont la résistance varie en fonction de l'éclairement qu'elle reçoit donc en fonction de l'éloignement de la diode. La résistance de la photorésistance diminue lorsque la diode s'éloigne mais la loi de variation n'est pas linéaire. Un dispositif électronique qui sera décrit ci-après permet de rétablir la linéarité. L'ensemble résistance photo-électrique plus dispositif électronique constitue un transducteur qui convertit analogiquement le déplacement du tube 14 par rapport au tube 15 en un signal électrique proportionnel. Bien entendu, ce transducteur peut être remplacé par n'importe que l autre transducteur de déplacement linéaire équivalent, par exemple par un potentiomètre linéaire.

Le mode de réalisation représenté sur la figure 2 au moyen d'un transducteur photo-électrique est préférentiel car il n'entraîne aucun frottement d'un tube sur l'autre et les capteurs ont une très faible inertie et ne gênent pas les mouvements naturels de la mandibule. Bien entendu, on peut remplacer la diode 19 par n'importe quelle autre source lumineuse et la photorésistance 20 par n'importe quel autre détecteur photo-électrique.

Les capteurs 13 comportent, en outre, une tige filetée 21 qui se visse dans un alésage fileté du tube 15 et qui permet d'ajuster la longueur du capteur au repos en fonction de l'écartement des plaques 2 et 3. De préférence, les parties extrêmes des capteurs portant les oeillets 16a et 17a sont en matière plastique qui isole électriquement les capteurs des plaques 2 et 3.

On voit sur la figure 1 une tige filetée 22 dont l'extrémité supérieure est vissée dans un écrou 23 fixé à la plaque 2, ce qui permet de faire varier la longueur de la tige 22 située au-dessous de la plaque. La tige 22 porte à l'extrémité inférieure une fourchette buccale 24 qui est introduire dans la bouche du patient où elle prend appui sur la face occlusale du maxillaire supérieur, par l'intermédiaire d'un tampon en pâte durcissable qui se moule sur les dents. Cette fourchette sert à reporter sur l'articulateur proprement dit la distance qui sépare la platine supérieure de la face occlusale des dents du maxillaire supérieur.

Les figures 4 et 5 représentent un mode de réalisation de l'articulateur proprement dit d'un dispositif selon l'invention. Celui-ci comporte un support fixe, ayant par exemple la forme de deux portiques 25a et 25b, sur lequel est fixée une platine supérieure 26. Il comporte, en outre, une platine inférieure 27 qui est suspendue à la platine 26 par six muscles artificiels 28. Les six muscles 28 ont une structure identique et pour la clarté du dessin, on a représenté certains d'entre eux par des lignes en pointillés. Sur les platines 26 et 27 on fixe respectivement un moulage 29 du maxillaire supérieur et un moulage 30 du maxillaire inférieur du patient 1. Les moulages 29 et 30 sont fixés aux platines 26 et 27 par tout moyen connu, par exemple au moyen de deux supports rigides 31 et 32 et de blocs en une pâte durcissable.

On commence par mettre chaque capteur et chaque muscle artificiel en butée et on égalise leurs longueurs un à un en utilisant les tiges filetées. On règle ensuite la position de la plaque supérieure par rapport au crâne du patient pour que, lorsque la mâchoire est fermée, les capteurs soient sensiblement à mi course. En utilisant la fourchette 22, 24, on positionne ensuite le maxillaire supérieur 29 de telle sorte que la face occlusale des dents des moulages soit à une distance de la platine supérieure 26 égale à la distance qui sépare la plaque 2 de la face occlusale des dents du maxillaire supérieur du patient. Les six muscles artificiels 28 occupent par rapport aux deux platines 26 et 27 et aux moulages 29 et 30 des positions relatives identiques à celles des capteurs 13 par rapport aux plaques 2 et 3 et par rapport aux maxillaires du patient. Notamment les muscles 28 sont symétriques deux à deux par rapport à un plan sagittal PP'. On précise que les deux platines 26 et 27 sont reliées entre elles uniquement par les muscles artificiels 28 et que notamment elles ne sont reliées par aucune articulation.

La figure 6 représente à plus grande échelle et en coupe axiale, l'un des muscles artificiels 28. Chacun des muscles 28 comporte deux tiges alignées 33 et 34 qui peuvent coulisser axialement l'une par rapport à l'autre, par exemple deux tubes qui coulissent télescopiquement. Les deux extrémités du muscle sont reliées respectivement aux platines 26 et 27 par des articulations à rotule 35 et 36 identiques aux articulations qui relient les capteurs 13 aux plaques 2 et 3. Par exemple les tiges 33 et 34 portent à leur extrémité un oeillet 33a, qui est engagé sur un barillet sphérique 36a qui est fixé sur un support 35b, 36b solidaire de l'une des platines 26 ou 27. Une des articulations, par exemple l'articulation 36, est portée par une tige filetée 36c qui se visse dans un filetage du tube 34 et qui permet de régler la longueur totale du muscle. Chaque muscle 28 comporte, en outre, un servomoteur 37 d'un type connu qui comporte par exemple un moteur électrique entraînant deux crémaillères en sens inverse, lesquelles crémaillères portent deux pattes 38 et 39 qui se déplacent linéairement en sens inverse l'une de l'autre. La patte 38 est fixée par exemple au tube 34 tandis que la patte 39 est fixée au tube 33 et coulisse dans une fente longitudinale du tube 34. Ce type de servomoteur et le montage dit flottant sur les deux tubes 33 et 34 sont bien connus dans les servomécanismes. Le montage flottant permet de doubler la course utile du servomoteur. Chaque servomoteur 37 est asservi au signal délivré par la capteur 13 auquel il correspond, de telle sorte que chaque muscle artificiel 28 reproduit fidèlement les mouvements d'élongation du capteur 13 auquel il correspond et la composition des mouvements d'élongation de tous les muscles fait que le mouvement relatif de la platine 27 par rapport à la platine 26 reproduit fidèlement le mouvement relatif des plaques 2 et 3 et donc le mouvement relatif des moulages 29 et 30 reproduit exactement tous les mouvements de la mandibule du patient.

La figure 7 est un schéma électronique qui représente la diode électroluminescente 19 et la photorésistance 20 d'un capteur. La diode 19 est alimentée sous une faible tension continue, de l'ordre de 2,5 V, à travers une résistance 40. La photorésistance 20 est placée dans le circuit de l'émetteur d'un transistor 41. La tension de sortie est prélevée au point 42 sur l'émetteur du transistor 41. On a vu que la résistance de la photorésistance variait non linéairement en fonction du déplacement relatif des tiges 14 et 15. Etant donné que la plage de variations de la résistance est importante, les caractéristiques du transistor 41 varient également de façon non linéaire et la non linéarité des variations du gain du transistor compense sensiblement la non linéarité de la variation de résistance. On obtient ainsi au point 42 une tension qui varie linéairement en fonction du déplacement linéaire relatif des tiges 14 et 15 du capteur.

La figure 7 représente, en outre, le servomoteur 37 qui correspond au capteur et qui est asservi à celui-ci. Ce servomoteur entraîne le curseur d'un potentiomètre 43 qui délivre une tension qui varie en fonction de la position du servomoteur.

Le circuit d'asservissement comporte essentiellement, de façon connue, un amplificateur opérationnel 44, monté en comparateur, qui compare la tension délivrée par le capteur au point 42 et la tension délivrée par le potentiomètre 43. Une résistance de contre-réaction 45 permet de diminuer le gain de l'amplificateur. La sortie de l'amplificateur 44 est connectée sur un amplificateur de puissance composé de deux transistors 46a et 46b montés en opposition (push-pull). La sortie de l'amplificateur de puissance commande le servomoteur 37 dans le sens qui annule l'écart entre les deux tensions à l'entrée du comparateur 44.

La figure 7 représente un cas de transmission des mouvements de la mandibule en temps réel à l'articulateur. Il est précisé toutefois que l'articulateur peut se trouver placé à grande distance du dispositif de mouvement et dans ce cas, les tensions délivrées aux points 42 sont facilement transmises à distance par des lignes de télécommunication et on peut donc obtenir ainsi une téléreproduction du mouvement de la mandibule.

La figure 8 représente un schéma synoptique des principaux composants des circuits permettant d'enregistrer les signaux émis par les capteurs 13 pour relire ensuite ces signaux, ce qui permet de reproduire les mouvements de la mandibule en temps différé, localement ou à distance, et de les répéter plusieurs fois. Les signaux sont enregistrés sur deux pistes d'un magnétophone 47. Les repères 48 et 49 représentent les deux têtes d'enregistrement correspondant aux deux pistes.

Les sorties S1 à S6 des six capteurs, prises aux points 42 de la figure 7, sont connectées sur six entrées d'un multiplexeur 50. Le multiplexeur comporte une septième entrée à laquelle est appliquée une tension constante de 1 V destinée au tarage de l'appareil. Le multiplexeur 50 est piloté par un compteur binaire d'impulsions 51 à quatre sorties A, B, C, D. Les sorties A, B, C commandent les changements de voie d'entrée de multiplexeur. La sortie D est connectée sur un monostable 52 qui délivre une impulsion dont la durée est supérieure à une période d'horloge. La sortie du monostable 52 est connectée sur la borne de remise à zéro (RAZ) du compteur 51.

L'entrée du compteur 51 est connectée sur une chaîne comportant une horloge 53 qui délivre un signal sinusoïdal, un circuit 54 de mise en forme des signaux d'horloge qui délivre des impulsions rectangulaires, un circuit 55 destiné à rendre les signaux compatibles avec des composants T.T.L. et un second monostable 56 destiné à compenser le déphasage dû à la mise en forme des signaux d'horloge lors de la lecture.

La sortie du mulitplexeur 50 est connectée sur un amplificateur 57, adaptateur d'impédance. La sortie de l'amplificateur 57 est connectée sur un circuit convertisseur 58 qui convertit analogiquement les tensions V en fréquences f suivant une loi de la forme $f = fo - KV$, c'est-à-dire une loi linéaire avec une pente négative.

La conversion des tensions en fréquence est nécessaire car il arrive fréquemment que la tension délivrée par un capteur reste constante ou varie très lentement au cours du prélèvement des mouvements et le magnétophone ne peut pas enregistrer des tensions continues. La sortie du convertisseur 58 est connectée sur un préamplificateur d'enregistrement 60 dont la sortie est connectée sur la tête d'enregistrement 48 de la piste No. 1 du magnétophone.

Les circuits comportent, en outre, un circuit multiplicateur analogique 61 dont les deux entrées sont connectées l'une à la sortie de l'horloge 53 et l'autre à la sortie du monostable 52 à travers un inverseur 62. On obtient à la sortie du circuit 61 un signal sinusoidal qui est interrompu pendant la durée des impulsions de remise à zéro délivrées par le monostable 52. Ce signal est enregistré sur la piste No. 2 du magnétophone en passant à travers un préamplificateur 63 et la tête d'enregistrement 49.

La figure 9 est un schéma synoptique des circuits de lecture des signaux enregistrés sur la bande magnétique du magnétophone 47. Les repères 64 et 65 désignent les têtes de lecture des pistes 1 et 2 du magnétophone. Les signaux lus par la tête de lecture 64 sont amplifiés par un préamplificateur 65. La sortie de l'amplificateur 65 est connectée sur un circuit convertisseur analogique 66 qui convertit les fréquences en tensions. La sortie du convertisseur 66 est connectée sur l'entrée d'un amplificateur opérationnel monté en additionneur à gain ajustable qui est destiné à inverser le sens de variation de la tension en fonction de la fréquence, qui a été inversé par le convertisseur 58 lors de l'enregistrement qui réalise, on l'a vu, une fonction linéaire à pente négative. La sortie de l'amplificateur 67 est connectée sur l'entrée d'un démultiplexeur 69 à travers un amplificateur adaptateur d'impédance 68. Le multiplexeur 69 comporte sept sorties. Sur six d'entre elles, numérotées S1 à S6, on recueille une tension qui correspond à la tension délivrée au point 42 par l'un des capteurs. Chaque sortie S1 à S6 est connectée sur un dispositif d'asservissement d'un servomoteur conformément à la figure 1. Les sorties du multiplexeur sont connectées chacune de façon connue sur des condensateurs C1 à C6 qui constituent des intégrateurs qui gardent en mémoire la tension de sortie de chaque voie pendant la durée d'un cycle du démultiplexeur.

La septième voie de sortie est connectée à travers un transistor 70 sur un galvanomètre 71 qui permet de contrôler le niveau de la tension de référence. Le signal lu par la tête de lecture 65 est amplifié et mis en forme par un amplificateur puis rendu compatible avec les circuits TTL par un circuit d'interface CMOS-TTL 73.

La sortie du circuit d'interface 73 est connectée sur l'entrée d'un circuit conformateur d'impulsions et inverseur 74 qui délivre des impulsions d'horloge qui commandent un compteur d'impulsions 75 qui pilote le démultiplexeur 69.

La sortie du circuit conformateur 74 est connectée également sur un intégrateur 76 qui extrait du signal complexe, enregistré sur la piste 2, les impulsions de remise à zéro qui sont envoyées sur la remise à zéro du compteur 75.

Les circuits électroniques de multiplexage et démultiplexage des signaux ainsi que les circuits d'enregistrement et de lecture sont bien connus des techniciens en électronique et il n'est pas nécessaire d'en donner une description plus détaillée.

Bien entendu, sans sortir du cadre de l'invention, les divers éléments constitutifs des dispositifs et des circuits électroniques qui viennent d'être décrits à titre d'exemple, pourront être remplacés par des éléments équivalents remplissant les mêmes fonctions. Notamment, les enregistreurs magnétiques à deux pistes peuvent être remplacés par des enregistreurs multipistes ce qui permet de simplifier les circuits électroniques, notamment de supprimer le multiplexage mais présente l'inconvénient de nécessiter des enregistreurs magnétiques coûteux.

## Revendications

1. Dispositif articulateur pour reproduire les mouvements de la mandibule du type comportant deux supports 26, 27, mobiles l'un par rapport à l'autre, sur lesquels sont fixés respectivement un moulage du maxillaire supérieur 29 et du maxillaire inférieur 30 d'un patient et des moyens pour animer lesdits supports afin de reproduire les mouvements de la mandibule dudit patient, caractérisé en ce qu'il comporte:

— d'une part, un dispositif de prélèvement des mouvements de la mandibule qui est composé de six capteurs 13 de déplacement linéaires qui sont fixés par leur deux extrémités respectivement au crâne et à la mandibule du patient, qui sont symétriques deux à deux par rapport au plan sagittal PP', les trois capteurs situés d'un même côté dudit plan sagittal étant disposés suivant trois directions non parallèles deux à deux, et qui convertissent analogiquement les déplacements linéaires en signaux électriques;

— d'autre part l'articulateur proprement dit dont les deux platines 26, 27 sont reliées entre elles uniquement par des muscles artificiels 28 occupant des positions identiques à celles desdits capteurs, lesquels muscles artificiels comportent chacun un servomoteur linéaire 37;

— et des circuits électroniques qui asservissent chaque servomoteur au capteur correspondant à partir des signaux électriques délivrés par ledit capteur.

2. Dispositif articulateur selon la revendication 1, caractérisé en ce que lesdits circuits électroniques comportent des moyens pour enregistrer les signaux électriques délivrés par lesdits capteurs et des moyens pour lire les signaux enregistrés et pour les retransmettre en temps différé aux circuits d'asservissement desdits servomoteurs.

3. Dispositif selon l'une quelconque des revendications 1 et 2, caractérisé en ce que ledit dispositif de prélèvement des mouvements de la mandibule comporte une plaque supérieure 2 et une plaque inférieure 3 qui sont fixées respectivement au crâne et à la mandibule d'un patient et qui sont reliées entre elles par au six capteurs de déplacement 13, lesquels capteurs sont composés chacun de deux tiges alignées 14, 15 qui coulissent l'une par rapport à l'autre et dont les extrémités sont reliées par des articulations à rotule 16, 17 respectivement à la plaque supérieure 2 et à la plaque inférieure 3 et d'un transducteur qui délivre un signal électrique proportionnel au déplacement en translation d'une tige par rapport à l'autre.

4. Dispositif selon l'une quelconque des revendications 1 à 3, caractérisé en ce que lesdits capteurs de déplacement sont composés de deux tubes 14, 15 qui coulissent télescopiquement l'un dans l'autre, dont l'un porte une source lumineuse, par exemple une diode électroluminescente 19 et l'autre un détecteur photosensible, par exemple une photorésistance 20.

5. Dispositif selon la revendication 3, caractérisé en ce qu'il comporte, en outre, une tige 22 de longueur ajustable, dont l'extrémité supérieure est fixée à ladite plaque supérieure et dont l'extrémité inférieure porte une fourchette 24 qui est appliquée contre la face occlusale des dents du maxillaire du patient, laquelle fourchette sert à déterminer la distance séparant ladite plaque supérieure du maxillaire supérieur et à reporter celle-ci sur ledit articulateur.

6. Dispositif selon l'une quelconque des revendications 3 et 5, caractérisé en ce qu'il comporte une deuxième fourchette 11, 12, qui est fixée à la plaque inférieure 3 dudit dispositif de prélèvement du mouvement et qui est introduite dans la bouche du patient et fixée à la face externe des dents du maxillaire inférieure, de préférence par une pâte durcissable.

7. Dispositif selon l'une quelconque des revendications 3 à 6, caractérisé en ce que ladite plaque supérieure 2 a la forme d'une visière échancrée, qui encercle le front du patient et qui est reliée à un casque 5 qui coiffe le crâne du patient par deux articulations latérales 7a et par une tige frontale 8 de longueur ajustable.

8. Dispositif selon l'une quelconque des revendications 3 à 7, caractérisé en ce que ledit articulateur comporte:

— un support fixe, formé par exemple de portiques 25a, 25b;
— une platine supérieure 26, fixée audit support, sur laquelle est fixé un moulage 29 du maxillaire supérieur;
— et une platine inférieure 27, sur laquelle est fixé un moulage du maxillaire inférieur, qui est suspendue à ladite platine supérieure par au moins six muscles artificiels 28 qui correspondent chacun à l'un desdits capteurs, lesquels muscles artificiels comportent chacun deux tiges alignées 33, 34 qui coulissent axialement l'une par rapport à l'autre et qui sont reliées par des articulations à rotule 35, 36 respectivement à ladite platine supérieure 26 et à ladite platine inférieure 27 et un servomoteur linéaire 37 qui comporte deux pattes 38, 39, mobiles en translation en sens inverse l'une de l'autre, qui sont fixées respectivement aux deux tiges 33, 34, lequel servomoteur est asservi au signal délivré par le capteur 13 auquel il correspond.

9. Dispositif selon l'une quelconque des revendications 3 à 8, caractérisé en ce que les tiges qui composent lesdits capteurs de déplacement et lesdits muscles artificiels comportent une tige filetée 21, 36c, qui permet d'ajuster leur longueur.

10. Dispositif selon l'une quelconque des revendications 2 à 9, caractérisé en ce que lesdits circuits électroniques d'enregistrement comportent un multiplexeur 50 dont les voies d'entrées S1 à S6 sont connectées aux sorties desdits capteurs de déplacement 13, un convertisseur tension fréquence 58 qui convertit analogiquement les tensions sortant du multiplexeur en fréquences, une horloge 58 qui pilote un compteur d'impulsions, qui pilote ledit multiplexeur 50, un monostable 52 dont l'entrée est connectée sur la dernière voie D de sortie dudit compteur d'impulsions 51 et dont la sortie est connectée sur la remise à zéro RAZ dudit compteur d'impulsions 51, un multiplicateur analogique 61 dont les deux entrées sont connectées l'une sur ladite horloge 53 et l'autre, à travers un inverseur 62, sur la sortie dudit monostable 52 et un enregistreur magnétique 47 à deux pistes sur la première desquelles on enregistre les signaux sortant dudit convertisseur 58 de tension en fréquence et sur la deuxième desquelles on enregistre les signaux sortant dudit multiplicateur analogique 61.

11. Dispositif selon la revendication 10, caractérisé en ce que les circuits électroniques de lecture des informations enregistrées sur ledit enregistreur magnétique 47 comportent un convertisseur de fréquence en tension 66 dont l'entrée est connectée sur la tête de lecture 64 de la première piste dudit enregistreur, un démultiplexeur 69 dont l'entrée est connectée sur la sortie dudit convertisseur de fréquence en tension 66, un compteur d'impulsions 75 qui pilote ledit démultiplexeur, un circuit inverseur et conformateur d'impulsions 74 dont l'entrée est connectée sur la tête de lecture 65 de la deuxième piste dudit enregistrer 47 et dont la sortie est connectée, d'une part, sur l'entrée dudit compteur d'impulsions 75 et, d'autre part, à travers un circuit intégrateur 76 sur la borne de remise à zéro RAZ dudit compteur 75.

**Patentansprüche**

1. Artikulationsvorrichtung zur Reproduktion der Bewegungen des Kiefers, mit zwei gegeneinander beweglichen Trägern (26, 27), auf denen ein Abguß des oberen Gebisses (29) bzw. des unteren Gebisses (30) eines Patienten und eine Einrichtung befestigt sind, die die Träger zur Reproduktion der Bewegungen des Gebisses des Patienten bewegt, gekennzeichnet

— durch einerseits eine Vorrichtung zum Abgreifen der Bewegungen des Kiefers, die aus sechs Gebern (13) für lineare Verschiebungen besteht, die mit ihren Enden am Schädel bzw. am Kiefer des Patienten befestigt und zueinander symmetrisch sind, wobei die drei auf derselben Seite der sagittalen Ebene gelegenen Geber in drei zueinander paarweise, nicht parallelen Richtungen angeordnet sind und die die linearen Verschiebungen anlog in elektrische Signale umwandeln,
— durch andererseits die eigentliche Artikulationsvorrichtung, deren beide Platten (26, 27) durch künstliche Muskeln (28) verbunden sind, die mit denjenigen der Geber identische Stellungen einnehmen, wobei die künstlichen Muskeln jeweils aus einem linearen Servomotor (37) bestehen, und
— durch elektronische Kreise, die jeden Servomotor am entsprechenden Geber mit den vom Geber gelieferten elektrischen Signalen steuern.

2. Artikulationsvorrichtung nach Anspruch 1, dadurch gekennzeichnet,

— daß die elektronischen Kreise aufweisen: Einrichtungen zum Registrieren der von den Gebern gelieferten elektrischen Signale und Einrichtungen zum Lesen der registrierten Signale und zu deren Rückübertragung in unterschiedlicher Zeit auf die Steuerkreise der Servomotoren.

3. Vorrichtung nach einem der Ansprüche 1 und 2, dadurch gekennzeichnet,

— daß die Vorrichtung zum Abgreifen der Bewegungen des Kiefers eine obere Platte (2) und eine untere Platte (3) aufweist, die am Schädel bzw. am Kiefer eines Patienten befestigt und untereinander durch wenigstens sechs Verschiebungsregister (13) verbunden sind, wobei die Geber bestehen: jeweils aus zwei ausgefluchteten Stangen (14, 15), die gegeneinander verschiebbar und deren Enden durch Kugelgelenke (16, 17) mit der oberen Platte (2) bzw. mit der unteren Platte (3) verbunden sind, und aus einem Umformer, der ein elektrisches Signal liefert, das der translatorischen Verschiebung einer Stange gegenüber der anderen proportional ist.

4. Vorrichtung nach einem der Ansprüche 1 bis 3, dadurch gekennzeichnet,

– daß die Verschiebungsgeber aus zwei Rohren (14, 15) bestehen, die teleskopartig ineinander verschiebbar sind und von denen das eine eine Lichtquelle, z. B. eine Leuchtdiode (19) und das andere einen lichtempfindlichen Sensor, z. B. einen Photowiderstand (20), aufweist.

5. Vorrichtung nach Anspruch 3, gekennzeichnet

– durch ferner eine Stange (22) von einstellbarer Länge, deren oberes Ende an der oberen Platte befestigt ist und deren unteres Ende einen Bügel (24) trägt, der gegen die Schließfläche der Zähne des Kiefers des Patienten gedrückt wird, wobei der Bügel zur Verschiebung des die obere Platte vom oberen Gebiß trennenden Abstand und zu dessen Übertragung auf die Artikulationsvorrichtung dient.

6. Vorrichtung nach einem der Ansprüche 3 und 5, gekennzeichnet

– durch einen zweiten Bügel (11, 12), der an der unteren Platte der Vorrichtung zum Abgreifen der Bewegung befestigt ist, in den Mund des Patienten eingeführt wird und an der Außenfläche der Zähne des unteren Gebisses vorzugsweise mit einer aushärtbaren Masse befestigt ist.

7. Vorrichtung nach einem der Ansprüche 3 bis 6, dadurch gekennzeichnet,

– daß die obere Platte (2) die Form eines gebogenen Visiers hat, das die Stirn des Patienten umgibt und mit einem den Schädel des Patienten bedeckenden Helm über zwei seitliche Gelenke (7a) und eine frontale Stange (8) von einstellbarer Länge verbunden ist.

8. Vorrichtung nach einem der Ansprüche 3 bis 7, gekennzeichnet

– durch einen beispielsweise durch Ständer (25a, 25b) gebildeten feststehenden Träger,
– durch eine am Träger befestigte obere Platte (26), an der ein Abguß (29) des oberen Gebisses befestigt ist, und
– durch eine untere Platte (27), an der ein Abguß des unteren Gebisses befestigt ist und die an der oberen Platte durch wenigstens sechs künstliche Muskeln (28) aufgehängt ist, die jeweils einem der Geber entsprechen, wobei die künstlichen Muskeln jeweils aufweisen: ausgefluchtete Stangen (33, 34), die axial gegeneinander verschiebbar und mit der oberen Platte (26) bzw. mit der unteren Platte (27) verbunden sind, und einen linearen Servomotor (37) mit zwei translatorisch gegeneinander bewegbaren Ansätzen (38), die jeweils an den beiden Stangen (33, 34) befestigt sind, wobei der Servomotor von dem Signal gesteuert wird, das von dem ihm entsprechenden Geber geliefert wird.

9. Vorrichtung nach einem der Ansprüche 3 bis 8, dadurch gekennzeichnet,

– daß die die Verschiebungsgeber und die künstlichen Muskeln bildenden Stangen eine Gewindestange (21, 36c) aufweisen, die eine Einstellung ihrer Länge gestattet.

10. Vorrichtung nach einem der Ansprüche 2 bis 9, dadurch gekennzeichnet,

– daß die elektronischen Registrierungskreise aufweisen: einen Multiplexer (50), dessen Eingangspfad (S1 bis S6) mit den Ausgängen der Verschiebungsgeber (13) verbunden sind, einen Spannungs-Frequenz-Umformer (58), der die den Multiplexer verlassenden Spannungen in Frequenzen umformt, einen Zeitgeber (58), der einen Impulszähler steuert, der den Multiplexer (50) steuert, einen monostabilen Multivibrator (52), dessen Eingang mit dem letzten Ausgangspfad (D) des Impulszählers (51) verbunden ist und dessen Ausgang mit der Nullstellung (RAZ) des Impulszählers (51) verbunden ist, einen analogen Multiplikator (61), von dessen beiden Ausgängen der eine mit dem Zeitgeber (53) und der andere über einen Inverter (62) mit dem Ausgang des monostabilen Multivibrators (52) verbunden ist, und ein magnetisches Registriergerät (47) mit zwei Spuren, von denen auf der ersten Spur die Signale aus dem Spannungs-Frequenz-Umformer (58) und auf der zweiten Spur die Signale aus dem analogen Multiplikator (61) registriert werden.

11. Vorrichtung nach Anspruch 10, dadurch gekennzeichnet,

– daß die elektronischen Kreise zum Lesen der auf dem magnetischen Registriergerät (47) registrierten Informationen aufweisen: einen Frequenz-Spannungs-Umformer (66), dessen Eingang mit dem Lesekopf (64) der ersten Spur des Registriergerätes verbunden ist, einen Demultiplexer (69), dessen Eingang mit dem Ausgang des Frequenz-Spannung-Umformers (66) verbunden ist, einen den Demultiplexer steuernden Impulszähler (75), einen Impulsumkehr- und -formungskreis (74), dessen Eingang mit dem Lesekopf (65) der zweiten Spur des Registriergerätes (47) und dessen Ausgang verbunden ist einerseits mit dem Eingang des Impulszählers (75) und andererseits über einen Integrationskreis (76) mit der Nullstellklemme RAZ des Zählers (75).

## Claims

1. Articulator device for reproducing the movements of the mandible, of the type comprising two supports 26, 27, movable one with respect to the other, on which are respectively secured casts of the upper 29 and lower 30 jaws of a patient and means for actuating said supports in order to re-create the movements of the mandible of the patient, characterised in that it comprises:

— on the one hand, means for sampling the movements of the mandible, composed of six sensors of linear displacement 13 which are secured by their end to the patient's skull and mandible respectively, which are symmetrical in pairs with respect to the sagittal plane PP; the three sensors situated on one side of said sagittal plane being arranged in three directions nonparallel in pairs, and which convert analogically the linear displacements into electrical signals;

— on the other hand, the articulator proper, the two plates 26, 27 of which are joined together by artificial muscles 28 only, which muscles occuppy positions identical to those of said sensors, and each one of which muscles comprise a linear servomotor 37;

— and electronic circuits binding each servomotor to the corresponding sensor depending on the electrical signals delivered by said sensor.

2. Articulator device according to claim 1, characterised in that the said electronic circuits comprise means for recording the electrical signals delivered by said sensors and means for reading the recorded signals and for their deferred re-transmission to the circuits controlling the said servomotors.

3. Device according to claims 1 and 2, characterised in that the said means for sampling the movements of the mandible comprise an upper plate 2 and a lower plate 3 which are secured respectively to the skull and to the mandible of a patient and which are joined together by at least six sensors of displacement 13, each one of which is composed of two aligned rods 14, 15, sliding one with respect to the other and of which the ends are connected by swivel joints 16, 17 respectively to the upper plate 2 and to the lower plate 3 and of a transducer which delivers an electrical signal proportional to the translational displacement of one rod in relation to the other.

4. Device according to any one of claims 1 to 3, characterised in that the said displacement sensors are composed of two tubes 14, 15 sliding telescopically one into the other, one carrying a source of light, such as for example, an electroluminescent diode 19 and the other a photosensitive detector, such as for example a photoresistor 20.

5. Device according to claim 3, characterised in that it further comprises a rod 22 of adjustable length, the upper end of which is secured to the said upper plate and the lower end is provided with a fork 24 which is applied against the occluding face of the teeth in the jaws of the patient, which fork is used to determine the distance separating the upper plate from the upper jaw and to carry said distance onto the articulator.

6. Device according to any one of claims 3 and 5, characterised in that it comprises a second fork 11, 12, which is secured to the lower plate of said movement sampling device and which is introduced in the mouth of the patient and secured to the outer face of the teeth of the lower jaw, preferably by way of a hard-setting paste.

7. Device according to any one of claims 3 to 6, characterised in that the said upper plate 2 is vizorshaped with a cut-out portion and encircles the patient's forehead, said upper plate being secured to a helmet 5 which covers the patient's head by means of two lateral joints and a frontal rod of adjustable length.

8. Device according to any one of claims 3 to 7, characterised in that the said articulator comprises:

— a fixed support, formed for example by gantries 25a, 25b;

— an upper plate 26, fixed to said support, and on which is mounted a cast 29 of the upper jaw;

— and a lower plate 27, on which is fixed a cast of the lower jaw and which is suspended to the said upper plate by at least six artificial muscles 28, each of which corresponds to one of the said sensors, the said artificial muscles each comprising two aligned rods 33, 34 sliding axially one with respect to the other and connected by way of swivel joints 35, 36 to the said upper plate 26 and to the said lower plate 27 respectively, and a linear servomotor 37 which comprises two tabs 38, 39 movable in translation one in reverse of the other, which tabs are secured respectively on the two rods 33, 34, and which servomotor is controlled by the signal delivered by the sensor 13 to which it corresponds.

9. Device according to any one of claims 3 to 8, characterised in that the rods composing the said displacement sensors and the said artificial muscles comprise a threaded pin 21, 36c, permitting to adjust their length.

10. Device according to any one of claims 2 to 9, characterised in that the said electronic recording circuits comprise a multiplexor 50 whose input channels S1 to S6 are connected to the outputs of the said displacement sensors 13, a voltage-frequency convertor 58 which analogically converts into frequencies the voltages outputted by the multiplexor, a clock 58 controlling a pulse counter, which controls said multiplexor 50, a monostable 52 whose input is connected to the last output channel D of the pulse counter 51 and whose output is connected to the zero setting device RAZ of said pulse counter 51, an analog multiplier unit 61, the two inputs of which are connected one to said clock 53 and the other via an inverter 62, to the output of said monostable 52 and a two-track magnetic recorder 47, on the first track of which are recorded the signals outputted by the voltage-frequency converter 58, and on the second track of which are recorded the signals outputted by the said analog multiplier unit 61.

11. Device according to claim 10, characterised in that the electronic reading circuits provided for reading the data recorded on the said magnetic recorder 47 comprises a converter 66 converting frequencies into voltage, the input of which is connected on the reading head 64 of the first track of said recorder, a demultiplexor 69 whose input is connected on the output of said converter of frequency into voltage 66, a pulse counter 75 controlling the said demultiplexer, a pulse-inverter and shaping circuit 74 whose input is connected to the reading head 65 of the second track of the recorder 47 and whose output is connected, on the one hand, to the input of said pulse counter 75 and, on the other hand, through an integrator circuit 76 on the zero-setting terminal RAZ of said counter 75.

Fig. 1

Fig. 2

Fig-3

Fig-6

Fig. 4

Fig. 5

Fig. 7

Fig_8

Fig_9